# EUROPÄISCHE PATENTSCHRIFT

(11) **EP 3 204 926 B1**
(45) Veröffentlichungstag und Bekanntmachung des Hinweises auf die Patenterteilung: **29.01.2025**
(21) Anmeldenummer: 15781328.8
(22) Anmeldetag: 08.10.2015
(51) Int. Cl.: G08G 1/0962, G08G 1/0967, G08G 1/16

(54) **VERFAHREN ZUM HANDHABEN EINER REGELKARTE**
METHOD FOR HANDLING A RULE CHART
PROCÉDÉ POUR UTILISER UNE CARTE DE RÈGLES DE CIRCULATION

(30) Priorität: 10.10.2014 DE 102014220621
(43) Veröffentlichungstag der Anmeldung: 16.08.2017
(73) Patentinhaber: Continental Automotive Technologies GmbH, 30175 Hannover (DE)
(72) Erfinder: ZYDEK, Bastian, 65812 Bad Soden (DE); GROTENDORST, Thomas, 65760 Eschborn (DE); KELLING, Enno, 65760 Eschborn (DE); LÜKE, Stefan, 61191 Rosbach vor der Höhe (DE); MENZEL, Marc, 35096 Weimar (Lahn) (DE)
(74) Vertreter: Continental Corporation
(86) Internationale Anmeldenummer: PCT/EP2015/073242
(87) Internationale Veröffentlichungsnummer: WO 2016/055562

(56) Entgegenhaltungen:
- EP-A2- 1 569 183
- DE-A1- 102010 030 867
- DE-A1- 102012 021 282
- DE-A1- 102014 003 550
- US-A1- 2014 278 029
- M. CAMPBELL ET AL: "Autonomous driving in urban environments: approaches, lessons and challenges", PHILOSOPHICAL TRANSACTIONS OF THE ROYAL SOCIETY A: MATHEMATICAL, PHYSICAL AND ENGINEERING SCIENCES, vol. 5469, no. 1928, 13 October 2010 (2010-10-13), pages 4649 - 4672, XP055235487, ISSN: 1939-3539, DOI: 10.1098/rsta.2010.0110

## Beschreibung

Die Erfindung betrifft ein Verfahren zum Handhaben einer Verkehrsregeln enthaltenden Regelkarte in einem Fahrzeug.

Verkehrsregeln werden heutzutage im Regelfall durch allgemein gültige Regeln wie rechts-vor-links, durch Verkehrsschilder, durch Lichtzeichen oder durch Verkehrspolizisten festgelegt. Individuell lenkbare Fahrzeuge wie Kraftfahrzeuge oder Fahrräder, Schienenfahrzeuge wie Straßenbahnen und auch Fußgänger vermeiden durch Beachtung dieser Regeln mögliche Kollisionen und Unfälle. Dies gilt beispielsweise für Vorfahrtsregeln, jedoch auch für andere Verkehrsregeln wie beispielsweise Überholverbote.

Bei heutigen Fahrzeugen und anderen Verkehrsteilnehmern werden Verkehrsregeln üblicherweise vom Fahrer oder Fußgänger von Verkehrsschildern, Lichtzeichen oder Verkehrspolizisten abgelesen oder anhand einer bestimmten Verkehrslage ermittelt. So kann ein Fahrer beispielsweise anhand fehlender Verkehrszeichen an einer Kreuzung erkennen, dass dort die Grundregel rechts-vor-links gilt. Entsprechend kann er anhand anderer an der Kreuzung befindlicher Fahrzeuge ableiten, ob er Vorfahrt hat oder nicht, also die Vorfahrt gewähren muss. Sieht der Fahrer einen Verkehrspolizisten, kann er ebenfalls ablesen ob er weiterfahren darf oder nicht. Nähert sich ein Fahrzeug einer Einmündung, beispielsweise einer Auffahrt auf eine Autobahn oder eine andere Fernverkehrsstraße, so kann der Fahrer je nach in dem Land geltenden Gesetzen ermitteln, ob ein einscherendes Fahrzeug grundsätzlich auf eine Lücke im fließenden Verkehr warten muss, oder ob dem einfahrenden Fahrzeug Vorrang zu gewähren ist.

Die manuelle Erfassung von Verkehrsregeln ist immer mit dem Risiko menschlichen Versagens verbunden. Aus einer falschen Erfassung oder auch vorsätzlichen Missachtung von Verkehrsregeln resultiert ein sehr hohes Unfallrisiko. Deshalb wurden bereits Systeme entwickelt, welche beispielsweise mittels einer Kamera Verkehrsregeln erfassen und den Fahrer bei der Beachtung der Verkehrsregeln unterstützen können. Allerdings können diese Systeme einen Unfall insbesondere dann nicht verhindern, wenn bei zumindest einem Fahrzeug, welches an einer zu regelnden Situation beteiligt ist, zumindest eine Verkehrsregel falsch erfasst wird. Dies kann beispielsweise aufgrund technischer Fehler oder auch aufgrund schwierigen Erkennungssituationen wie einem schneebedeckten Verkehrsschild erfolgen.

Das Dokument US 2014/0278029 A1 offenbart Verfahren und Software zum Verwalten der Prioritäten von Fahrzeugen, welche sich einer Konfliktzone nähern. Dabei kann ein ad-hoc-Netzwerk zum Entwickeln eines lokalen Verkehrsleitplans aufgebaut werden.

Es ist deshalb eine Aufgabe der Erfindung, ein alternatives, beispielsweise verbessertes Verfahren zur Handhabung von Verkehrsregeln bereitzustellen. Dies wird erfindungsgemäß durch ein Verfahren nach Anspruch 1 erreicht. Vorteilhafte Ausgestaltungen können beispielsweise den abhängigen Ansprüchen entnommen werden. Der Inhalt der Ansprüche wird durch ausdrückliche Inbezugnahme zum Inhalt der Beschreibung gemacht.

Die Erfindung betrifft ein Verfahren zum Handhaben einer Verkehrsregeln enthaltenden Regelkarte in einem Fahrzeug. Das Verfahren weist folgende Schritte auf:
- Erkennen eines Umgebungszustands mittels einer Anzahl von Umfeldsensoren,
- Ableiten einer Anzahl von Verkehrsregeln basierend auf dem Umgebungszustand,
- Erzeugen der Regelkarte basierend zumindest auf den Verkehrsregeln, und
- Senden der Regelkarte an eine externe Einheit.

Mittels des erfindungsgemäßen Verfahrens kann eine Verkehrsregel nicht nur im Fahrzeug automatisiert erfasst, sondern auch an eine externe Einheit wie beispielsweise ein anderes Fahrzeug oder einen zentralen Server gesendet werden. Dies erlaubt einen Abgleich der Verkehrsregeln mehrerer Fahrzeuge. Es kann dabei beispielsweise der Fall verhindert werden, dass zwei sich kreuzende Fahrzeuge an einer Kreuzung dem jeweiligen Fahrer anzeigen, er habe Vorfahrt, da die Fahrzeuge bei Verwendung des erfindungsgemäßen Verfahrens miteinander kommunizieren und etwaige Unstimmigkeiten in den erkannten Verkehrsregeln, welche zu einer erhöhten Unfallgefahr führen können, erkennen können. Dies stellt jedoch nur einen möglichen Anwendungsbereich des erfindungsgemäßen Verfahrens dar, zahlreiche weitere Anwendungen sind möglich, beispielsweise diejenigen, welche weiter unten beschrieben werden.

Die Verwendung einer Regelkarte ist insbesondere vorteilhaft, weil sich eine solche Karte nicht darauf beschränkt die Verkehrsregeln für das eigene Fahrzeug zu umfassen, sondern auch die für andere Verkehrsteilnehmer, insbesondere Fahrzeuge, geltenden Verkehrsregeln beinhalten kann. Mit einer solchen Karte werden auf einer technischen Ebene die Rahmenbedingungen geschaffen, die nicht nur die für einen selbst geltenden Verkehrsregeln berücksichtigen, sondern auch solche, die für andere Verkehrsteilnehmer gelten.

Unter Verkehrsregeln können insbesondere Vorfahrt beziehungsweise Vorfahrt gewähren sowie ein Überholverbot verstanden werden. Auch andere Verkehrsregeln können jedoch mittels des erfindungsgemäßen Verfahrens verarbeitet werden, beispielsweise Geschwindigkeitsbegrenzungen oder Halteverbote.

Unter einer Regelkarte wird insbesondere eine Zusammenstellung von Verkehrsregeln verstanden, welche beispielsweise einer zu regelnden Situation und/oder einem zu regelnden Straßenabschnitt oder einem Gebiet zugeordnet sind. Insbesondere kann eine Regelkarte Verkehrsregeln enthalten, welche zueinander korrespondieren, beispielsweise Vorfahrtsregeln für jede Straße und jede Fahrtrichtung von mehreren Straßen, welche sich an einer Kreuzung kreuzen, oder Vorfahrtsregeln für eine Autobahn und eine Einfädelspur der Autobahn. Idealerweise sollten die Verkehrsregeln derart zueinander korrespondieren, dass bei Beachtung der Verkehrsregeln eine Kollision der beteiligten Fahrzeuge vermieden wird. Beispielsweise kann dies bedeuten, dass bei einer Kreuzung beide Richtungen einer durchgehenden Straße Vorfahrt erhalten, während beide Richtungen einer kreuzenden Straße Vorfahrt gewähren erhalten. Bei einer Einmündung kann dies bedeuten, dass dem durchfahrenden Verkehr oder dem einmündenden Verkehr Vorfahrt gewährt wird. Bei einer Straße mit Überholmöglichkeit kann dies bedeuten, dass bei Gegenverkehrt ein temporäres Überholverbot erzeugt wird, beispielsweise ein Überholverbot hinsichtlich des Überholens eines langsam fahrenden Fahrzeugs wie eines Lastkraftwagens oder eines landwirtschaftlichen Fahrzeugs.

Unter einem Umgebungszustand kann beispielsweise eine Kreuzung, eine Anzahl von Verkehrsschildern, eine Anzahl von Lichtzeichen, eine Anzahl weiterer Fahrzeuge oder anderer Verkehrsteilnehmer, eine Einmündung und/oder eine Straße verstanden werden. Es kann darunter auch eine bestimmte Situation verstanden werden, welche regelungsbedürftig erscheint, beispielsweise wenn ein langsam fahrendes Fahrzeug Gegenverkehr erkennt, welcher einem Überholvorgang nachfolgender Fahrzeuge entgegensteht.

Bei den Umfeldsensoren kann es sich beispielsweise um eine Anzahl von Kameras handeln. Es kann sich jedoch auch um andere Umfeldsensoren, beispielsweise um Ultraschallsensoren, Radargeräte, Fahrzeug-zu-X-Kommunikationsmittel oder um Mobilfunkkommunikationsmittel handeln. Mittels einer Kamera können beispielsweise Kreuzungstopologien, Verkehrszeichen, Einmündungen oder entgegenkommende Fahrzeuge erkannt werden.

Verkehrsregeln können beispielsweise anhand von erkannten Verkehrszeichen oder Kreuzungstopologien erkannt werden. Aus einem erkannten Verkehrszeichen, beispielsweise Vorfahrt, Vorfahrt gewähren oder STOP, kann typischerweise unmittelbar die entsprechende Verkehrsregel abgeleitet werden. Aus einer erkannten Kreuzungstopologie ohne erkannte Verkehrszeichen kann als Grundregel rechts-vor-links abgeleitet werden, wobei anhand anderer erkannter Fahrzeuge eine Verkehrsregel für das eigene Fahrzeug abgeleitet werden kann. Aus einer erkannten Einmündung oder Auffahrt kann unter Berücksichtigung lokaler Gesetze und Regelungen eine Vorfahrtsregel abgeleitet werden. Aus erkannten entgegenkommenden Fahrzeugen kann ein Überholverbot für nachfolgende Fahrzeuge abgeleitet werden.

Die Regelkarte wird typischerweise dadurch erzeugt, dass zunächst die unmittelbar abgeleiteten Regeln, beispielsweise aufgrund eines erkannten Vorfahrtsschilds, in die Regelkarte geschrieben werden und anschließend dazu zwingend korrespondierende Verkehrsregeln in die Regelkarte geschrieben werden. Beispielsweise kann zu einer Vorfahrt des eigenen Fahrzeugs ein Vorfahrt gewähren des Querverkehrs korrespondieren, da ansonsten ein Unfall drohen würde. Zu einer Vorfahrt eines auf einer Autobahn durchfahrenden Fahrzeugs kann ein Vorfahrt gewähren eines einmündenden Fahrzeugs korrespondieren.

Durch das Senden der Regelkarte an die externe Einheit kann insbesondere eine Überprüfung durchgeführt werden, ob die Regelkarte zu anderen Regelkarten korrespondiert beziehungsweise zusammen mit anderen Regelkarten ein stimmiges Bild ergibt. Darunter wird insbesondere verstanden, dass die Regelkarten Verkehrsregeln enthalten, welche ein möglichst geringes Unfallrisiko ergeben.

Eine Regelkarte kann beispielsweise dazu verwendet werden, dem Fahrer die darin enthaltenen Verkehrsregeln auf der Instrumententafel oder in einem Head-up-Display anzuzeigen. Sie kann jedoch beispielsweise auch im Rahmen eines Systems zum autonomen Fahren verwendet werden oder für ein Assistenzsystem.

Gemäß einer Ausführung ist vorgesehen, dass
- das Verfahren ansprechend darauf ausgeführt wird, dass eine Annäherung an eine Kreuzung oder Einmündung erkannt wird,
- wobei die Annäherung bevorzugt mittels Umfeldsensoren, insbesondere mittels einer Kamera, mittels Satellitennavigation, mittels einer elektronischen Straßenkarte und/oder mittels Fahrzeug-zu-X-Kommunikation erkannt wird.

Dies ermöglicht eine Durchführung des Verfahrens in einer solchen Situation, welche besonders regelungsbedürftig ist. Dies kann insbesondere auch der Fall sein, wenn eine Annäherung mehrerer Fahrzeuge stattfindet und/oder erkannt wird. Unter einer Einmündung kann insbesondere auch eine Auffahrt auf eine Autobahn verstanden werden. Unter einer Kreuzung kann auch ein Kreisverkehr oder eine andere Verzweigung oder Zusammenführung von Straßen verstanden werden.

Bevorzugt ist dabei vorgesehen, dass die abgeleiteten Verkehrsregeln der Kreuzung oder Einmündung zugeordnet sind, insbesondere Vorfahrt und Vorfahrt gewähren.

Gemäß einer Ausführung ist vorgesehen, dass
- das Verfahren ansprechend darauf ausgeführt wird, dass eine regelungsbedürftige Situation erkannt wird,
- und zwar insbesondere eine Situation, welche einem Überholvorgang nachfolgender Fahrzeuge entgegensteht, oder eine Situation wie Einscheren oder Überholen.
- wobei die Situation bevorzugt mittels Umfeldsensoren, insbesondere mittels einer Kamera, oder mittels Fahrzeug-zu-X-Kommunikation erkannt wird.

Diese Ausführung ermöglicht es beispielsweise, dass ein langsam fahrendes Fahrzeug wie beispielsweise ein Lastkraftwagen erkennt, wenn entgegenkommende Fahrzeuge einem Überholvorgang nachfolgender Fahrzeuge entgegenstehen, und dies den nachfolgenden Fahrzeugen durch eine entsprechende Regelkarte, welche an die nachfolgenden Fahrzeuge gesendet wird, mitteilt. Damit kann die Sicherheit beispielsweise auf Landstraßen erheblich erhöht werden, da der Lastkraftwagen typischerweise über ein besseres Blickfeld und bessere Sensoren verfügt als die nachfolgenden Fahrzeuge.

Gemäß einer vorteilhaften Weiterbildung wird das Verfahren gemäß dieser Ausführung ansprechend auf eine von einem anderen Fahrzeug empfangene Nachricht ausgeführt wird, welche eine Aufforderung zum Senden einer Regelkarte enthält.

Dies ermöglicht es, dass ein nachfolgendes Fahrzeug vor einem beabsichtigten Überholvorgang bei einem langsam fahrenden Fahrzeug nachfrägt, ob ein Überholvorgang möglich ist. Wenn bei dem langsam fahrenden Fahrzeug kein Gegenverkehr erkannt wird, kann eine Regelkarte erzeugt werden, welche kein Überholverbot enthält. Wenn Gegenverkehr erkannt wird, kann eine Regelkarte erzeugt werden, welche ein temporäres Überholverbot enthält. Diese Regelkarte wird dann an das nachfolgende Fahrzeug gesendet und zeigt diesem an, ob ein Überholvorgang möglich ist oder besser unterlassen werden soll.

Das nachfolgende Fahrzeug kann die Aufforderung zum Senden einer Regelkarte insbesondere ansprechend auf ein Angebot zur Mitwirkung bei einem Überholvorgang senden, wobei in diesem Angebot das langsam fahrende Fahrzeug nachfolgenden Fahrzeugen mitteilen kann, dass es zur Mitwirkung bei der Planung eines Überholvorgangs in der Lage ist. Ein solches Angebot kann beispielsweise das Fahrzeug aussenden, welches das erfindungsgemäße Verfahren ausführt.

Gemäß einer Ausführung ist vorgesehen, dass nach Erkennen einer Situation, welche einem Überholvorgang nachfolgender Fahrzeuge entgegensteht, ein temporäres Überholverbot als Verkehrsregel abgeleitet wird.

Gemäß einer Ausführung ist vorgesehen, dass das Verfahren laufend wiederholt, insbesondere periodisch wiederholt zum kontinuierlichen Abgleich ausgeführt wird.

Damit können beispielsweise beteiligte Fahrzeuge, insbesondere mittels direkter oder indirekter Funkverbindung kommunizierende Fahrzeuge oder Fahrzeuge, welche an einer regelungsbedürftigen Situation beteiligt sind, laufend ihre Regelkarten austauschen, insbesondere um etwaige Probleme, beispielsweise nicht korrespondierende oder nicht übereinstimmende Regelkarten, so früh wie möglich zu erkennen und Unfällen vorzubeugen. Das Verfahren kann auch derart ausgeführt werden, dass ein Fahrzeug seine jeweilige Regelkarte laufend sendet, unabhängig davon ob sie von einem anderen Fahrzeug oder einer anderen Einheit empfangen wird.

Gemäß einer Ausführung ist vorgesehen, dass die Regelkarte an zumindest ein anderes Fahrzeug als externe Einheit direkt gesendet wird.

Dies kann insbesondere unter Verwendung von Fahrzeug-zu-X-Kommunikation, besonders unter Verwendung von Fahrzeug-zu-Fahrzeug-Kommunikation, erfolgen. Hierunter werden beispielsweise Techniken verstanden, welche eine direkte Kommunikation zwischen Fahrzeugen ermöglichen, ohne auf die Vermittlung durch ein Mobilfunknetz oder eine andere externe Infrastruktur angewiesen zu sein.

Gemäß einer Ausführung ist vorgesehen, dass zusammen mit der Regelkarte eines oder mehrere der folgenden Elemente gesendet werden:
- ein Kennzeichen des die Regelkarte sendenden Fahrzeugs,
- eine Identifikation des die Regelkarte sendenden Fahrzeugs,
- eine Kreuzungstopologie,
- Objekteigenschaften, insbesondere Art, Position und/oder Trajektorie, des die Regelkarte sendenden Fahrzeugs,
- Informationen über eine Zuverlässigkeit der Regelkarte und/oder über eine Zuverlässigkeit von Umfeldsensoren, insbesondere einer Kamera,
- Informationen über Fahrzeuge, welche nicht mit einer Technik zum Teilnehmen am Abstimmen von Verkehrsregeln ausgestattet sind, insbesondere welche nicht mit einer Fahrzeug-zu-X-Kommunikationstechnik ausgestattet sind, und insbesondere einschließlich deren Kennzeichen,
- ein Zuverlässigkeitsmaß.

Derartige Informationen können die Auswertung der Regelkarte bei einer empfangenden externen Einheit verbessern und/oder erleichtern. Ein Zuverlässigkeitsmaß kann sich beispielsweise auf die Qualität von Sensoren des sendenden Fahrzeugs beziehen und somit anzeigend dafür sein, wie zuverlässig die Regelkarte ist, beispielsweise ob damit zu rechnen ist, dass Verkehrszeichen oder Kreuzungstopologien tatsächlich richtig erkannt wurden.

Gemäß einer Ausführung ist vorgesehen, dass das Verfahren ferner folgende Schritte aufweist:
- Vergleichen der erzeugten Regelkarte mit einer weiteren Regelkarte, und
- Auslösen eines Abstimmungsvorgangs, wenn die Regelkarte und die weitere Regelkarte nicht übereinstimmen.

Damit kann für den Fall, dass Regelkarten nicht übereinstimmen, ein Abstimmungsvorgang ausgelöst werden, welcher beispielsweise zu übereinstimmenden und das Unfallrisiko weiter senkenden Regelkarten führen kann. Unter nicht übereinstimmenden Regelkarten werden insbesondere Regelkarten verstanden, welche für zumindest ein tatsächlich vorhandenes oder auch nur für ein möglicherweise vorhandenes Fahrzeug zumindest zwei unterschiedliche Verkehrsregeln anzeigen. Beispielsweise können zwei nicht übereinstimmende Regelkarten derart aufgebaut sein, dass eine Regelkarte für eine bestimmte Straße an einer Kreuzung in einer bestimmten Richtung Vorfahrt anzeigt, wohingegen die andere Regelkarte Vorfahrt gewähren anzeigt. Übereinstimmende Regelkarten zeigen typischerweise für alle möglichen Fahrzeugstandorte die jeweils gleichen Verkehrsregeln an.

Wenn die Regelkarten übereinstimmen, wird typischerweise kein Abstimmungsvorgang ausgelöst. In diesem Fall kann beispielsweise eine Mitteilung an eine externe Einheit wie andere Fahrzeuge oder einen zentralen Server gesendet werden, wobei die Mitteilung anzeigt, dass die Regelkarten übereinstimmen. Dies zeigt an, dass die Kreuzung basierend auf den übereinstimmenden Regelkarten ohne Gefahr von allen beteiligten Fahrzeugen passiert werden kann.

Gemäß einer Ausführung wird die weitere Regelkarte direkt von einem anderen Fahrzeug empfangen. Dies ermöglicht insbesondere einen Abgleich zwischen Regelkarten, welche von unterschiedlichen Fahrzeugen beispielsweise mittels jeweiliger Umfeldsensoren erzeugt wurden. Die weitere Regelkarte kann jedoch beispielsweise auch von einem zentralen Server empfangen werden. Dies ermöglicht die Verwendung eines globalen Back-Ends, wobei der zentrale Server die Fahrzeuge bei der Verwaltung und beim Austausch der Regelkarten unterstützt.

Gemäß einer Ausführung ist vorgesehen, dass an dem Abstimmungsvorgang das Fahrzeug sowie andere Fahrzeuge beteiligt sind, welche sich einer Kreuzung oder Einmündung annähern oder welche auf der gleichen Straße fahren. Gemäß einer weiteren, damit auch kombinierbaren Ausführung ist vorgesehen, dass an dem Abstimmungsvorgang ausschließlich Fahrzeuge beteiligt sind, von welchen eine Kreuzung jeweiliger Trajektorien berechnet wurde.

Dies entspricht typischen Gruppen von Fahrzeugen, zwischen welchen ein Abgleich von Verkehrsregeln beziehungsweise diese Verkehrsregeln enthaltenden Regelkarten vorteilhaft ist.

Gemäß einer Ausführung ist vorgesehen, dass der Abstimmungsvorgang durch mehrfachen direkten Austausch und Abgleich von Regelkarten und/oder Plausibilisierungsinformationen zwischen daran beteiligten Fahrzeugen erfolgt, bis alle daran beteiligten Fahrzeuge eine identische Regelkarte haben oder bis eine vorgegebene Anzahl von Iterationen erreicht ist.

Damit können im direkten Austausch zwischen den Fahrzeugen die Regelkarten iterativ verbessert werden, so dass alle Fahrzeuge die gleiche Regelkarte haben. Plausibilisierungsinformationen können dabei beispielsweise begleitende Informationen sein, beispielsweise über Zuverlässigkeiten. Beispielsweise kann es sich dabei um die bereits weiter oben beschriebenen Informationen oder Daten handeln. Informationen über Zuverlässigkeiten, beispielsweise von Umfeldsensoren, können beispielsweise dazu verwendet werden, bestimmten Regelkarten den Vorzug zu geben oder ihnen ein höheres Gewicht beizumessen, wenn sie unter Verwendung besonders zuverlässiger Sensoren erzeugt wurden.

Gemäß einer Ausführung ist vorgesehen, dass ein Abgleich von Regelkarten und/oder Plausibilisierungsinformationen eine jeweilige Plausibilisierung beinhaltet, wobei eine Plausibilisierung vorzugsweise einen oder mehrere der folgenden Schritte aufweist:
- Bewertung und/oder Gewichtung vorliegender Informationen, insbesondere in Bezug auf Informationen anderer Fahrzeuge,
- Erfassen der Signifikanz und/oder Zuverlässigkeit von Informationen,
- Überprüfen, welche anderen Fahrzeuge identische Informationen haben oder identische Informationen gesendet haben,
- Ergänzen von Informationen, wenn diese komplementär sind.

Im Rahmen einer jeweiligen Plausibilisierung können jeweilige Regelkarten ausgewertet und/oder verändert werden, so dass eine Regelkarte entsteht, welche dann alle beteiligten Fahrzeuge verwenden können beziehungsweise welche für alle Fahrzeuge gilt. Wenn identische Informationen mehrerer Fahrzeuge vorliegen, so haben diese Informationen typischerweise eine höhere Konfidenz, so dass sie für die Erstellung einer gemeinsamen Regelkarte in besonderer Weise Berücksichtigung finden können. Gleiches kann für signifikantere und/oder zuverlässigere Informationen gelten.

Unter komplementären Informationen werden insbesondere Informationen verstanden, welche unverändert in eine einzige Regelkarte übernommen werden können, ohne dass sich dadurch eine Kollisionsgefahr von Fahrzeugen, welche diese Regelkarte befolgen, erhöht. Beispielsweise kann es sich bei Vorfahrt für eine Straße und Vorfahrt gewähren für eine Querstraße und komplementäre Verkehrsregeln und damit um komplementäre Informationen handeln.

Gemäß einer Ausführung ist vorgesehen, dass bei Durchführung des Abstimmungsvorgangs einer oder mehrere der folgenden Schritte iterativ ausgeführt werden:
- Bewerten einer Signifikanz und/oder Konfidenz von Informationen mit Schwellenwerten oder Wahrscheinlichkeiten, beispielsweise von Gefahrsituation oder Fahrmodus wie selbstfahrend oder automatisch fahrend eines jeweiligen Fahrzeugs,
- Plausibilisieren, beispielsweise technisch oder statistisch,
- Zusammentragen von Informationen, insbesondere aller verfügbarer Informationen,
- Fusionieren, insbesondere Erstellen eines neuen, beispielsweise erweiterten, insbesondere räumlich erweiterten und/oder präzisierten Bilds, das insbesondere inhaltlich stimmig ist.

Unter einem Bild kann beispielsweise eine Regelkarte verstanden werden. Es kann darunter auch eine anders repräsentierte Beurteilung einer Verkehrslage oder einer Straßentopologie verstanden werden. Inhaltlich stimmig ist ein Bild insbesondere dann, wenn jeweilige Verkehrsregeln zueinander korrespondieren, so dass sich die Kollisionswahrscheinlichkeit bei Beachtung der Verkehrsregeln beziehungsweise einer daraus erzeugten Regelkarte nicht erhöht und/oder minimal ist.

Es sei verstanden, dass der Abstimmungsvorgang sowohl bei dem Fahrzeug ausgeführt werden kann, welches den Abstimmungsvorgang ausgelöst hat, insbesondere wie weiter oben erläutert, oder auch bei jedem anderen beteiligten Fahrzeug. Das Verfahren ist somit, insbesondere in diesem Fall, nicht auf die Ausführung in einem Fahrzeug eingeschränkt. Es kann sich hier also beispielsweise auch um ein Verfahren handeln, welches über mehrere Fahrzeuge verteilt ausgeführt wird.

Gemäß einer Ausführung ist vorgesehen, dass aus dem Abstimmungsvorgang eine Regelkarte resultiert, welche an eine Anzahl anderer Fahrzeuge gesendet wird.

Dies ermöglicht insbesondere die Erstellung einer Regelkarte, welche dann von allen Fahrzeugen zu beachten ist.

Gemäß einer Ausführung ist vorgesehen, dass das Verfahren bei Durchführung des Abstimmungsvorgangs ferner einen Schritt des Erkennens einer Blockade aufweist.

Unter einer Blockade wird dabei insbesondere eine Situation verstanden, bei welcher mehrere Fahrzeuge derart aufeinander zu fahren oder derart angeordnet sind, dass eine eindeutige Vorfahrtsregelung nicht möglich ist. Dies kann beispielsweise der Fall sein, wenn vier Fahrzeuge aus unterschiedlichen Richtungen auf eine Kreuzung zu fahren, an welcher lediglich rechts-vor-links gilt, und gleichzeitig an der Kreuzung eintreffen.

Gemäß einer Ausführung ist vorgesehen, dass im Fall einer Blockade eine Regelkarte erstellt und/oder abgestimmt wird,
- welche einen möglichst gut fließenden Verkehr ermöglicht,
- bei welchem Fahrzeuge ohne Möglichkeit zur Teilnahme an dem Verfahren, insbesondere Fahrzeuge ohne Fahrzeug-zu-X-Kommunikationstechnik, priorisiert durchgelassen werden, und/oder
- bei welcher, insbesondere im Fall einer Pattsituation, Prioritäten anhand einem oder mehreren der folgenden Parameter Fahrzeugen zugewiesen werden:
   - Fahrgeschwindigkeit,
   - festes Regelwerk,
   - Fahrtrichtung, beispielsweise Himmelsrichtung,
   - Zählerstand jeweiliger Vorfahrtszähler,
   - Navigationsinformationen,
   - Informationen über aktivierte Komponenten wie ein Navigationssystem,
   - Informationen über gesetzte Blinker,
   - Informationen über automatische Lenkung,
   - Informationen über Nachgeben,
   - Fahrtziel,
   - geplante Trajektorie,
   - Sondereinsatzrechte oder Vorliegen besonderer Vorrechtsmerkmale;
      oder
- wobei im Fall einer Blockade der Abstimmungsvorgang abgebrochen wird.

Unter einer Pattsituation wird dabei insbesondere eine Situation verstanden, in welcher keines der Fahrzeuge a priori bevorrechtigt ist. Unter einem Nachgeben wird insbesondere verstanden, dass ein Fahrzeug von sich aus auf eine eventuell mögliche Vorfahrt verzichtet, wobei dieses Nachgeben bevorzugt den anderen beteiligten Fahrzeugen mitgeteilt wird.

Gemäß einer Ausführung ist vorgesehen, dass das Verfahren im Fall einer Blockade oder Pattsituation einen Schritt des Erkennens ausführt, ob ein Nachgeben angebracht ist, wobei im Falle des Nachgebens eine Nachricht über das Nachgeben an andere beteiligte Fahrzeuge gesendet wird.

Damit kann die Regelungskomplexität deutlich gesenkt werden, da ein Fahrzeug, welches nachgibt, zumindest zu einer eindeutigen und unmittelbar eintragbaren Verkehrsregel Vorfahrt gewähren führt.

Gemäß einer Ausführung ist vorgesehen, dass bei Durchführung des Abstimmungsvorgangs eine zufällige Zuteilung von Prioritäten zu den beteiligten Fahrzeugen erfolgt, wobei ein Fahrzeug mit höherer Priorität Vorrecht vor Fahrzeugen mit niedrigerer Priorität hat.

Dies ermöglicht bei Fehlen von anderen Anhaltspunkten für Prioritäten eine pragmatische, einfache und im Mittel gerechte Zuteilung der Prioritäten zu den einzelnen Fahrzeugen. Vorrechte beziehungsweise Prioritäten sollen dabei vorzugsweise korrespondieren, was insbesondere bedeuten kann, dass die jeweiligen Vorrechte oder Prioritäten beziehungsweise daraus abgeleitete Verkehrsregeln zu einem möglichst geringen Unfallrisiko führen.

Gemäß einer Ausführung ist vorgesehen, dass das Verfahren in dem Fall, dass während des Abstimmungsvorgangs ein Abbruchkriterium erfüllt wird, einen Schritt des Abbrechens des Abstimmungsvorgangs aufweist.

Dies ermöglicht eine Reaktion auf eine besonders schwierige Situation, wobei beispielsweise ein zu langer und möglicherweise ergebnisloser Abstimmungsvorgang vermieden werden kann. Insbesondere kann beispielsweise vermieden werden, dass der Abstimmungsvorgang zu viel Zeit in Anspruch nimmt, um noch für eine sichere Regelung der Verkehrssituation vor Eintreffen der Fahrzeuge an der kritischen Stelle zu sorgen. Bei einem Abbrechen der Abstimmungsvorgangs können beispielsweise Fahrmanöver abgebrochen werden, es kann eine Übergabe an die jeweiligen Fahrer stattfinden, oder es können andere geeignete, insbesondere eine Kollision vermeidende Maßnahmen ergriffen werden.

Gemäß einer Ausführung ist vorgesehen, dass die Regelkarte über eine Funkverbindung, insbesondere in einer Fahrzeug-zu-X-Nachricht, gesendet wird. Grundsätzlich können auch Bestätigungen über eine Funkverbindung, insbesondere in einer Fahrzeug-zu-X-Nachricht, gesendet oder übertragen werden.

Dies ermöglicht insbesondere einen direkten Austausch von Regelkarten oder Bestätigungen zwischen den beteiligten Fahrzeugen ohne Zwischenschaltung eines Mobilfunknetzes.

Gemäß einer Ausführung ist vorgesehen, dass das Verfahren ferner einen Schritt des Sendens von Informationen, insbesondere über Regelkarten und/oder Verkehrsregeln, an nachfolgende oder andere Verkehrsteilnehmer aufweist, wobei dieser Schritt des Sendens laufend wiederholt oder ansprechend auf eine vergangene geregelte Situation ausgeführt wird.

Damit können andere, insbesondere nachfolgende Verkehrsteilnehmer über die geregelte Situation informiert werden. Dies ermöglicht diesen beispielsweise, bei vergleichbaren Situationen die jeweilige Regelkarte zu übernehmen.

Gemäß einer Ausführung ist vorgesehen, dass die Regelkarte und/oder die weitere Regelkarte
- einer Kreuzung,
- einem Kreisverkehr
- einer Einmündung, insbesondere auf eine Autobahn,
- einer Engstelle,
- einer Haltestelle
   und/oder
- einer Straße, insbesondere einer Straße mit Überholmöglichkeit,
zugeordnet ist.

An derartigen Stellen treten häufig regelungsbedürftige Situationen auf, welche sich vorteilhaft mit dem erfindungsgemäßen Verfahren regeln lassen.

Gemäß einer Ausführung ist vorgesehen, dass beim Schritt des Sendens die Regelkarte an einen zentralen Server als externe Einheit gesendet wird, vorzugsweise zusammen mit Zuverlässigkeitsinformationen.

Damit wird ermöglicht, dass auch ein zentraler Server mit in die Regelung der Verkehrssituation einbezogen wird. Insbesondere kann der zentrale Server über erkannte Verkehrsregeln, beispielsweise von Verkehrsschildern, informiert werden. Die Kommunikation mit dem zentralen Server kann beispielsweise über eine Mobilfunkverbindung erfolgen.

Es sei verstanden, dass sich die Erfindung auch auf eine Vorrichtung zur Durchführung des erfindungsgemäßen Verfahrens bezieht. Eine solche Vorrichtung kann beispielsweise eine elektronische Steuerungseinrichtung sein, welche Prozessormittel und Speichermittel aufweist, wobei in den Speichermitteln Programmcode gespeichert ist, bei dessen Ausführung das erfindungsgemäße Verfahren ausgeführt wird. Eine solche Steuerungseinrichtung kann beispielsweise auch in eine andere Einrichtung integriert sein, beispielsweise in eine Steuerungseinrichtung für automatisiertes Fahren oder für Fahrassistenzsysteme. Die Erfindung betrifft des Weiteren ein nichtflüchtiges computerlesbares Speichermedium, auf welchem Programmcode enthalten ist, bei dessen Ausführung durch einen Prozessor ein erfindungsgemäßes Verfahren ausgeführt wird. Es sei verstanden, dass dabei grundsätzlich auf alle beschriebenen Ausführungen und Varianten des erfindungsgemäßen Verfahrens zurückgegriffen werden kann.

Außerdem betrifft die Erfindung ein System aus einer Anzahl von Fahrzeugen, wobei jedes Fahrzeug dazu ausgebildet ist, ein erfindungsgemäßes Verfahren auszuführen, und wobei die Fahrzeuge dazu ausgebildet sind, miteinander zu kommunizieren, insbesondere zur Durchführung des erfindungsgemäßen Verfahrens und insbesondere unter Verwendung von Fahrzeug-zu-X-Kommunikation. Hinsichtlich des erfindungsgemäßen Verfahrens kann dabei auf alle beschriebenen Ausführungen und Varianten zurückgegriffen werden.

Weitere Merkmale und Vorteile der Erfindung wird der Fachmann den nachfolgend mit Bezug auf die beigefügte Zeichnung beschriebenen Ausführungsbeispielen entnehmen. Dabei zeigen:
Fig. 1: Eine zu regelnde Situation an einer Kreuzung,
Fig. 2: Eine zu regelnde Situation auf einer Straße.

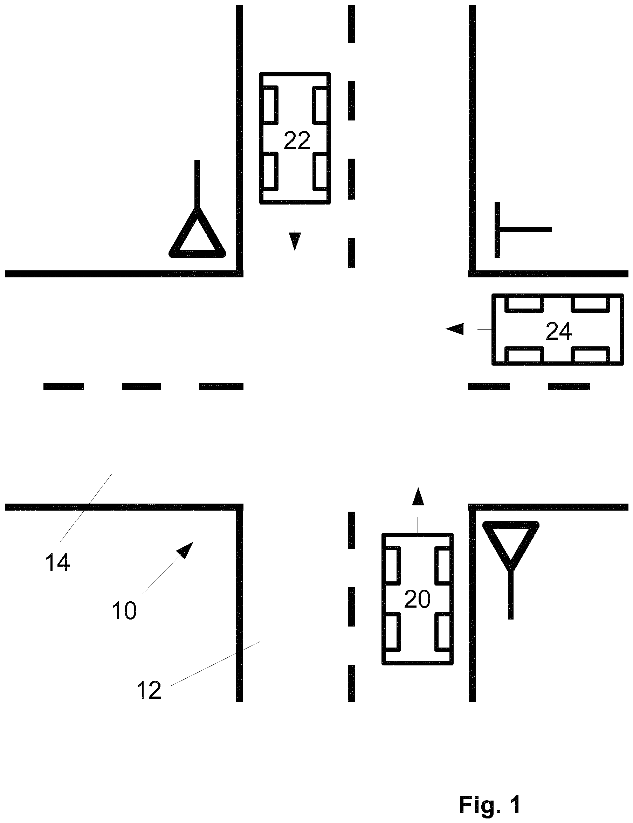

Fig. 1 zeigt eine Kreuzung 10, an welcher sich eine erste Straße 12 und eine zweite Straße 14 im rechten Winkel kreuzen. Auf der ersten Straße 12 fährt ein erstes Fahrzeug 20 auf die Kreuzung 10 zu. Diesem kommt auf der anderen Seite der Kreuzung 10 ein zweites Fahrzeug 22 entgegen, wobei dieses ebenfalls auf die Kreuzung 10 zu fährt. Auf der zweiten Straße 14 fährt quer hierzu ein drittes Fahrzeug 24, welches sich ebenfalls der Kreuzung 10 nähert. Die Fahrzeuge 20, 22, 24 sind jeweils lediglich schematisch dargestellt. Jeweilige Pfeile geben die Fahrtrichtungen an.

In der Situation, welche in Fig. 1 dargestellt ist, würde eine ungeregelte Weiterfahrt aller Fahrzeuge 20, 22, 24 zu einer Kollision führen. Aus diesem Grund gibt es Vorfahrtsregeln, welche die Priorität der Fahrzeuge 20, 22, 24 festlegen. Diese sind vorliegend mittels Verkehrszeichen angegeben, wobei das erste Fahrzeug 20 und das zweite Fahrzeug 22 jeweils ein Schild vor sich haben, welches Vorfahrt gewähren anzeigt, wohingegen das dritte Fahrzeug 24 ein Vorfahrtsschild vor sich hat. Aus dieser Regelung folgt grundsätzlich, dass das erste Fahrzeug 20 und das zweite Fahrzeug 22 zunächst warten müssen, bis das dritte Fahrzeug 24 vorbeigefahren ist. Anschließend können das erste Fahrzeug 20 und das zweite Fahrzeug 22 unmittelbar weiterfahren, da sich ihre jeweiligen Fahrtstrecken nicht kreuzen.

Vorliegend wird davon ausgegangen, dass das erste Fahrzeug 20 als erstes die zu regelnde Verkehrssituation erkennt, da es mittels Satellitennavigation und elektronischer Straßenkarte feststellt, dass es auf eine Kreuzung zu fährt und überdies mittels einer Kamera erkennt, dass sich auch andere Fahrzeuge der Kreuzung nähern. Mittels der Kamera erfasst das erste Fahrzeug 20 auch das Verkehrsschild "Vorfahrt gewähren", woraus das erste Fahrzeug 20 ableitet, dass es nicht bevorrechtigt ist.

Daraus leitet das erste Fahrzeug dann eine Regelkarte ab, welche der Kreuzung 10 zugehörig ist. In der Regelkarte wird für das erste Fahrzeug 20 die Verkehrsregel "Vorfahrt gewähren" eingetragen. Da in einem solchen Fall mangels Hinweisen auf eine abknickende Vorfahrtsregelung auch die gegenläufige Fahrtrichtung der gleichen Verkehrsregelung unterworfen ist, wird auch für das zweite Fahrzeug die Verkehrsregel "Vorfahrt gewähren" eingetragen. Ebenso ist bekannt, dass bei derartigen Kreuzungen der Querverkehr Vorfahrt hat, wenn ein bestimmtes Fahrzeug die Vorfahrt gewähren muss. Deshalb wird für das dritte Fahrzeug 24 und auch für die dazu entgegengesetzte Richtung die Verkehrsregel "Vorfahrt" eingetragen.

Die erzeugte Regelkarte, welche die eben erwähnten Verkehrsregeln in einem bestimmten, allgemein bekannten Format enthält, wird anschließend von dem ersten Fahrzeug 20 über Fahrzeug-zu-X-Kommunikationsmittel ausgesendet und von den anderen Fahrzeugen 22, 24 empfangen. Diese erstellen ebenfalls mit Hilfe jeweiliger Kameras eigene Regelkarten in gleicher Art und Weise wie eben beschrieben. Diese selbst erstellten Regelkarten werden mit der von dem ersten Fahrzeug 20 erhaltenen Regelkarte verglichen. Stimmen die Regelkarten überein, so senden die jeweiligen Fahrzeuge 22, 24 eine Bestätigung an das erste Fahrzeug 20, dass die Regelkarten übereinstimmen und somit für alle Fahrzeuge 20, 22, 24 ein gefahrloses Passieren der Kreuzung 10 unter Verwendung identischer Regelkarten möglich ist. Die in der gemeinsamen Regelkarte enthaltenen Verkehrsregeln werden den jeweiligen Fahrern der Fahrzeuge 20, 22, 24 zur Beachtung angezeigt.

Sollten die Regelkarten bei einem der anderen Fahrzeuge 22, 24 nicht übereinstimmen, beispielsweise weil eines der Fahrzeuge 20, 22, 24 ein Verkehrszeichen aufgrund Bedeckung mit Schnee nicht richtig identifiziert hat, so wird ein Abstimmungsvorgang ausgelöst. Eine entsprechende Ausführungsform wird nachfolgend mit Bezug auf Fig. 1 beschrieben.

Gemäß einer Ausführung führen die Fahrzeuge 20, 22, 24 einen kooperativen Abstimmungsvorgang durch. Dabei werden die Regelkarten in mehreren Iterationsschritten untereinander ausgetauscht und jeweils bei den Fahrzeugen 20, 22, 24 bewertet. Insbesondere werden dabei jeweils Informationen ausgewertet, welche die Zuverlässigkeit der jeweiligen Kamera, mit welcher die Regelkarte erstellt wurde, betreffen. Außerdem wird beachtet, dass eine Verkehrsregel umso zuverlässiger ist, je mehr Fahrzeuge sie unabhängig voneinander ermittelt haben.

Wenn die Fahrzeuge 20, 22, 24 hierdurch innerhalb einer vorgegebenen Höchstzahl von Iterationsschritten zu einer gemeinsamen Regelkarte gelangen, so wird diese Regelkarte unter den Fahrzeugen verteilt und beachtet. Damit ist nun ebenfalls ein gefahrloses Passieren der Kreuzung 10 möglich, wobei die in der gemeinsamen Regelkarte enthaltenen Verkehrsregeln den jeweiligen Fahrern angezeigt werden. Sollten die Fahrzeuge 20, 22, 24 nicht innerhalb einer vorgegebenen Höchstzahl von Iterationsschritten zu einer gemeinsamen Regelkarte gelangen, so wird der Abstimmungsvorgang abgebrochen. In diesem Fall wird den jeweiligen Fahrern der Fahrzeuge 20, 22, 24 ein Signal gegeben, welches sie zur eigenen Beurteilung der Verkehrslage auffordert.

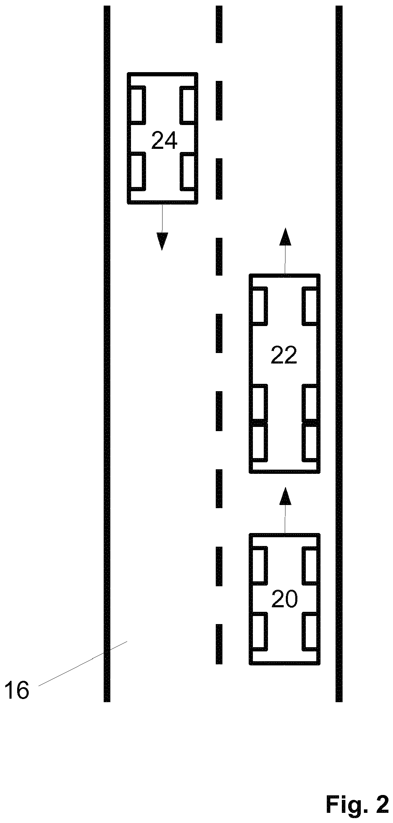

Fig. 2 zeigt eine einspurige Straße 16, auf welcher in beiden Richtungen Fahrzeuge fahren. Dabei handelt es sich um ein erstes Fahrzeug 20, welches einem zweiten Fahrzeug 22 folgt, sowie um ein entgegenkommendes drittes Fahrzeug 24. Das zweite Fahrzeug 22 ist dabei ein langsam fahrender Lastkraftwagen. Deshalb besteht für das erste Fahrzeug 20 eine Veranlassung dazu, das zweite Fahrzeug 22 zu überholen.

Das zweite Fahrzeug 22 ist als kommerzielles Fahrzeug mit besseren Sensoren, insbesondere einer besseren Kamera als die anderen Fahrzeuge 20, 24 ausgestattet. Überdies verfügt es über ein besseres Sichtfeld auf die Straße 16 als das nachfolgende erste Fahrzeug 20. Deshalb sendet das zweite Fahrzeug 22 eine Information an das erste Fahrzeug 20, in welcher es anzeigt, dass es bei der Durchführung eines Überholvorgangs behilflich sein kann.

Wenn der Fahrer des ersten Fahrzeugs 20 einen Überholvorgang durchführen möchte, betätigt er einen in dem ersten Fahrzeug 20 vorhandenen Knopf. Daraufhin wird die Überholabsicht in einer Nachricht an das zweite Fahrzeug 22 gesendet. Dieses erfasst dann mit seiner Kamera die vor ihm befindliche Umgebungssituation und erkennt dabei das entgegenkommende dritte Fahrzeug 24, welches ersichtlich einem Überholvorgang des ersten Fahrzeugs 20 entgegensteht. Das zweite Fahrzeug 22 erstellt daraufhin eine Regelkarte, welche für die Straße 16 ein temporäres Überholverbot enthält. Diese Regelkarte sendet das zweite Fahrzeug 22 an das erste Fahrzeug 20, welches diese Regelkarte erhält und aufgrund des temporären Überholverbots ermittelt, dass ein Überholvorgang derzeit nicht möglich ist. Dies wird dem Fahrer des ersten Fahrzeugs 20 angezeigt, so dass dieser dazu aufgefordert wird, den geplanten Überholvorgang zu unterlassen. Eine Kollision mit dem dritten Fahrzeug 24 wird auf diese Weise wirkungsvoll vermieden.

Es sei verstanden, dass die hier gezeigten Ausführungsbeispiele lediglich schematisch zu verstehen sind. Aus Gründen der Vereinfachung wird bei den unten stehenden Ansprüchen auf die Einfügung der Bezugszeichen verzichtet. Es wird davon ausgegangen, dass eine Zuordnung von Bezeichnungen der Ansprüche zu den Ausführungsbeispielen problemlos möglich ist.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden.

Es sei des Weiteren darauf hingewiesen, dass beispielsweise auch Ausführungen des Verfahrens in zumindest einer seiner Varianten möglich sind, in welchen lediglich ein Fahrzeug die Verkehrsregeln erfasst, eine Regelkarte daraus erstellt und dann an andere Fahrzeuge zur unmittelbaren Beachtung sendet. Diese Fahrzeuge empfangen dann die Regelkarte und verwenden sie ohne weitere Überprüfung. Bevorzugt können sie den Empfang und/oder die Beachtung bestätigen. Es ist außerdem möglich, dass alle beteiligten Fahrzeuge jeweilige Regelkarten von einem zentralen Server empfangen.

Es sei verstanden, dass ein erfindungsgemäßes Verfahren beispielsweise auch von Fahrzeugen oder unter Einbeziehung von Fahrzeugen ausgeführt werden kann, welche keine Umfeldsensoren wie beispielsweise Kameras, RADAR oder LIDAR aufweisen. Beispielsweise können derartige Fahrzeuge auf eine Kreuzung oder eine andere regelungsbedürftige Stelle zufahren, auf welche auch andere Fahrzeuge zufahren, welche Umfeldsensoren haben. Fahrzeuge ohne Umfeldsensoren können dann zwar typischerweise keine Regelkarte erzeugen, können jedoch trotzdem an einem Abstimmungsvorgang oder Abstimmschritt teilnehmen und dazu beitragen, zu einer gemeinsam akzeptierten und/oder verwendeten Regelkarte zu gelangen.

Es sei darauf hingewiesen, dass ein erfindungsgemäßes Verfahren grundsätzlich für alle Arten von Fahrzeugen verwendet werden kann. Insbesondere kann es für frei lenkbare oder auch automatisch fahrende Kraftfahrzeuge wie beispielsweise Personenkraftwagen, Lastkraftwagen, Busse oder Einsatzfahrzeuge verwendet werden. Es kann jedoch auch für Schienenfahrzeuge, beispielsweise Straßenbahnen oder auch normale Züge verwendet werden. Auch eine Anwendung bei Fahrzeugen, welche mit menschlicher oder tierischer Muskelkraft betrieben werden oder bei Spezialfahrzeugen wie beispielsweise bei Fahrzeugen des innerbetrieblichen Werksverkehrs, beispielsweise Gabelstapler, ist möglich.

## Patentansprüche

1. Verfahren zum Handhaben einer Verkehrsregeln enthaltenden Regelkarte in einem Fahrzeug, welches folgende Schritte aufweist:
- Erkennen eines Umgebungszustands mittels einer Anzahl von Umfeldsensoren des Fahrzeugs, **gekennzeichnet durch**,
- Ableiten einer Anzahl von Verkehrsregeln basierend auf dem Umgebungszustand durch eine Steuerungseinrichtung des Fahrzeugs,
- Erzeugen der Regelkarte basierend zumindest auf den Verkehrsregeln durch die Steuerungseinrichtung des Fahrzeugs, und
- Senden der Regelkarte mittels Fahrzeug-zu-X Kommunikation an eine externe Einheit,
- Vergleichen der erzeugten Regelkarte mit einer weiteren Regelkarte, wobei die weitere Regelkarte direkt von einem anderen Fahrzeug oder von einem zentralen Server empfangen wird, und
- Auslösen eines Abstimmungsvorgangs, wenn die Regelkarte und die weitere Regelkarte nicht übereinstimmen, wobei der Abstimmungsvorgang durch mehrfachen direkten Austausch und Abgleich von Regelkarten und/oder Plausibilisierungsinformationen zwischen daran beteiligten Fahrzeugen erfolgt, bis alle daran beteiligten Fahrzeuge eine identische Regelkarte haben oder bis eine vorgegebene Anzahl von Iterationen erreicht ist.

2. Verfahren nach Anspruch 1,
- wobei das Verfahren ansprechend darauf ausgeführt wird, dass eine Annäherung an eine Kreuzung oder Einmündung erkannt wird,
- wobei die Annäherung bevorzugt mittels Umfeldsensoren, insbesondere mittels einer Kamera, mittels Satellitennavigation, mittels einer elektronischen Straßenkarte und/oder mittels Fahrzeug-zu-X-Kommunikation erkannt wird.

3. Verfahren nach Anspruch 2,
- wobei die abgeleiteten Verkehrsregeln der Kreuzung oder Einmündung zugeordnet sind, insbesondere Vorfahrt und Vorfahrt gewähren.

4. Verfahren nach einem der vorhergehenden Ansprüche,
- wobei das Verfahren ansprechend darauf ausgeführt wird, dass eine regelungsbedürftige Situation erkannt wird,
- und zwar insbesondere eine Situation, welche einem Überholvorgang nachfolgender Fahrzeuge entgegensteht, oder eine Situation wie Einscheren oder Überholen,
- wobei die Situation bevorzugt mittels Umfeldsensoren, insbesondere mittels einer Kamera, oder mittels Fahrzeug-zu-X-Kommunikation erkannt wird.

5. Verfahren nach einem der vorhergehenden Ansprüche,
- wobei das Verfahren ansprechend auf eine von einem anderen Fahrzeug empfangene Nachricht ausgeführt wird, welche eine Aufforderung zum Senden einer Regelkarte enthält.

6. Verfahren nach Anspruch 4 oder 5,
- wobei nach Erkennen einer Situation, welche einem Überholvorgang nachfolgender Fahrzeuge entgegensteht, ein temporäres Überholverbot als Verkehrsregel abgeleitet wird.

7. Verfahren nach einem der vorhergehenden Ansprüche,
- welches laufend wiederholt, insbesondere periodisch wiederholt zum kontinuierlichen Abgleich ausgeführt wird.

8. Verfahren nach einem der vorhergehenden Ansprüche,
- wobei die Regelkarte an zumindest ein anderes Fahrzeug als externe Einheit direkt gesendet wird.

9. Verfahren nach einem der vorhergehenden Ansprüche,
- wobei zusammen mit der Regelkarte eines oder mehrere der folgenden Elemente gesendet werden:
- ein Kennzeichen des Fahrzeugs,
- eine Identifikation des Fahrzeugs,
- eine Kreuzungstopologie,
- Objekteigenschaften, insbesondere Art, Position und/oder Trajektorie, des die Regelkarte sendenden Fahrzeugs,
- Informationen über eine Zuverlässigkeit der Regelkarte und/oder über eine Zuverlässigkeit von Umfeldsensoren, insbesondere einer Kamera,
- Informationen über Fahrzeuge, welche nicht mit einer Technik zum Teilnehmen am Abstimmen von Verkehrsregeln ausgestattet sind, insbesondere welche nicht mit einer Fahrzeug-zu-X-Kommunikationstechnik ausgestattet sind, und insbesondere einschließlich deren Kennzeichen
- ein Zuverlässigkeitsmaß.

10. Verfahren nach einem der Ansprüche 1 bis 9,
- wobei an dem Abstimmungsvorgang das Fahrzeug sowie andere Fahrzeuge beteiligt sind, welche sich einer Kreuzung oder Einmündung annähern oder welche auf der gleichen Straße fahren;
und/oder
- wobei an dem Abstimmungsvorgang ausschließlich Fahrzeuge beteiligt sind, von welchen eine Kreuzung jeweiliger Trajektorien berechnet wurde.

11. Verfahren nach einem der Ansprüche 1 bis 10,
- wobei ein Abgleich von Regelkarten und/oder Plausibilisierungsinformationen eine jeweilige Plausibilisierung beinhaltet,
- wobei eine Plausibilisierung vorzugsweise einen oder mehrere der folgenden Schritte aufweist:
- Bewertung und/oder Gewichtung vorliegender Informationen, insbesondere in Bezug auf Informationen anderer Fahrzeuge,
- Erfassen der Signifikanz und/oder Zuverlässigkeit von Informationen,
- Überprüfen, welche anderen Fahrzeuge identische Informationen haben oder identische Informationen gesendet haben,
- Ergänzen von Informationen, wenn diese komplementär sind.

12. Verfahren nach einem der Ansprüche 1 bis 11,
- wobei bei Durchführung des Abstimmungsvorgangs einer oder mehrere der folgenden Schritte iterativ ausgeführt werden:
- Bewerten einer Signifikanz und/oder Konfidenz von Informationen mit Schwellenwerten oder Wahrscheinlichkeiten, beispielsweise von Gefahrsituation oder Fahrmodus wie selbstfahrend oder automatisch fahrend eines jeweiligen Fahrzeugs,
- Plausibilisieren, beispielsweise technisch oder statistisch,
- Zusammentragen von Informationen, insbesondere aller verfügbarer Informationen,
- Fusionieren, insbesondere Erstellen eines neuen, beispielsweise erweiterten, insbesondere räumlich erweiterten und/oder präzisierten Bilds, das insbesondere inhaltlich stimmig ist.

13. Verfahren nach einem der Ansprüche 1 bis 12,
- wobei aus dem Abstimmungsvorgang eine Regelkarte resultiert, welche an eine Anzahl anderer Fahrzeuge gesendet wird.

14. Verfahren nach einem der Ansprüche 1 bis 13,
- welches bei Durchführung des Abstimmungsvorgangs ferner einen Schritt des Erkennens einer Blockade aufweist.

15. Verfahren nach einem der Ansprüche 1 bis 14,
- wobei bei Durchführung des Abstimmungsvorgangs eine zufällige Zuteilung von Prioritäten zu den beteiligten Fahrzeugen erfolgt,
- wobei ein Fahrzeug mit höherer Priorität Vorrecht vor Fahrzeugen mit niedrigerer Priorität hat.

16. Verfahren nach einem der Ansprüche 1 bis 15,
- welches in dem Fall, dass während des Abstimmungsvorgangs ein Abbruchkriterium erfüllt wird, einen Schritt des Abbrechens des Abstimmungsvorgangs aufweist.

17. Verfahren nach einem der vorhergehenden Ansprüche,
- wobei die Regelkarte über eine Funkverbindung, insbesondere in einer Fahrzeug-zu-X-Nachricht, gesendet wird.

18. Verfahren nach einem der vorhergehenden Ansprüche,
- welches ferner einen Schritt des Sendens von Informationen, insbesondere über Regelkarten und/oder Verkehrsregeln, an nachfolgende oder andere Verkehrsteilnehmer aufweist,
- wobei dieser Schritt des Sendens laufend wiederholt oder ansprechend auf eine vergangene geregelte Situation ausgeführt wird.

19. Verfahren nach einem der vorhergehenden Ansprüche,
- wobei die Regelkarte und/oder die weitere Regelkarte
- einer Kreuzung,
- einem Kreisverkehr
- einer Einmündung, insbesondere auf eine Autobahn,
- einer Engstelle,
- einer Haltestelle
und/oder
- einer Straße, insbesondere einer Straße mit Überholmöglichkeit, zugeordnet ist.

20. Verfahren nach einem der vorhergehenden Ansprüche,
- wobei beim Schritt des Sendens die Regelkarte an einen zentralen Server als externe Einheit gesendet wird, vorzugsweise zusammen mit Zuverlässigkeitsinformationen.

## Claims

1. Method for handling a rule chart, containing traffic rules, in a vehicle, comprising the following steps:
- detecting a surroundings state by way of a number of surroundings sensors of the vehicle, **characterized by**
- a control device of the vehicle deriving a number of traffic rules based on the surroundings state,
- the control device of the vehicle generating the rule chart based at least on the traffic rules, and
- sending the rule chart to an external unit by way of vehicle-to-X communication,
- comparing the generated rule chart with a further rule chart, wherein the further rule chart is received directly from another vehicle or from a central server, and
- triggering a voting process if the rule chart and the further rule chart do not match, wherein the voting process is carried out through the multiple direct exchange and comparison of rule charts and/or plausibility information between vehicles involved therein until all vehicles involved therein have an identical rule chart or until a predefined number of iterations is reached.

2. Method according to Claim 1,
- wherein the method is carried out in response to the detection that an intersection or junction is being approached,
- wherein the approach is preferably detected by way of surroundings sensors, in particular by way of a camera, by way of satellite navigation, by way of an electronic road map and/or by way of vehicle-to-X communication.

3. Method according to Claim 2,
- wherein the derived traffic rules are assigned to the intersection or junction, in particular right of way and give way.

4. Method according to one of the preceding claims,
- wherein the method is carried out in response to the detection of a situation that requires regulation,
- specifically in particular a situation that precludes overtaking for following vehicles, or a situation such as cutting in or overtaking,
- wherein the situation is preferably detected by way of surroundings sensors, in particular by way of a camera, or by way of vehicle-to-X communication.

5. Method according to one of the preceding claims,
- wherein the method is carried out in response to a message received from another vehicle and containing a request to send a rule chart.

6. Method according to Claim 4 or 5,
- wherein a temporary ban on overtaking is derived as a traffic rule following detection of a situation that precludes overtaking for following vehicles.

7. Method according to one of the preceding claims,
- said method being carried out repeatedly, in particular periodically and repeatedly, for the purpose of continuous comparison.

8. Method according to one of the preceding claims,
- wherein the rule chart is sent directly to at least one other vehicle as an external unit.

9. Method according to one of the preceding claims,
- wherein one or more of the following elements are sent together with the rule chart:
- a registration number of the vehicle,
- an identification of the vehicle,
- an intersection topology,
- object properties, in particular the type, position and/or trajectory of the vehicle sending the rule chart,
- information about the reliability of the rule chart and/or about the reliability of surroundings sensors, in particular of a camera,
- information about vehicles that are not equipped with technology for participating in the vote on traffic rules, in particular that are not equipped with vehicle-to-X communication technology, and in particular including their registration numbers,
- a reliability metric.

10. Method according to one of Claims 1 to 9,
- wherein the voting process involves the vehicle and other vehicles approaching an intersection or junction or driving on the same road;
and/or
- wherein the voting process involves only vehicles for which an intersection of respective trajectories has been computed.

11. Method according to one of Claims 1 to 10,
- where comparing rule charts and/or plausibility information includes a respective plausibility check,
- wherein a plausibility check preferably comprises one or more of the following steps:
- evaluating and/or weighting available information, in particular in relation to information from other vehicles,
- recording the significance and/or reliability of information,
- checking which other vehicles have identical information or have sent identical information,
- adding information if said information is complementary.

12. Method according to one of Claims 1 to 11,
- wherein one or more of the following steps are carried out iteratively when performing the voting process:
- assessing the significance and/or confidence of information using threshold values or probabilities, for example hazardous situation or driving mode, such as self-driving or automatic driving, of a respective vehicle,
- carrying out a plausibility check, for example on a technical or statistical basis,
- collating information, in particular all available information,
- fusing, in particular creating a new, for example extended, in particular spatially extended and/or more precise image, which is in particular consistent in terms of content.

13. Method according to one of Claims 1 to 12,
- wherein the voting process gives rise to a rule chart that is sent to a number of other vehicles.

14. Method according to one of Claims 1 to 13,
- said method furthermore comprising a step of detecting a blockage when performing the voting process.

15. Method according to one of Claims 1 to 14,
- wherein priorities are allocated randomly to the vehicles involved when performing the voting process,
- wherein a higher-priority vehicle has priority over lower-priority vehicles.

16. Method according to one of Claims 1 to 15,
- said method, in the event that an abort criterion is met during the voting process, comprising a step of aborting the voting process.

17. Method according to one of the preceding claims,
- wherein the rule chart is sent over a radio connection, in particular in a vehicle-to-X message.

18. Method according to one of the preceding claims,
- said method furthermore comprising a step of sending information, in particular about rule charts and/or traffic rules, to following or other road users,
- wherein this sending step is repeated continuously or carried out in response to a past regulated situation.

19. Method according to one of the preceding claims,
- wherein the rule chart and/or the further rule chart is assigned to
- an intersection,
- a roundabout,
- a junction, in particular on a motorway,
- a bottleneck,
- a stopping place
and/or
- a road, in particular a road on which overtaking is possible.

20. Method according to one of the preceding claims,
- wherein, in the sending step, the rule chart is sent to a central server as an external unit, preferably together with reliability information.

## Revendications

1. Procédé permettant de gérer une carte de règles contenant des règles de circulation dans un véhicule, présentant les étapes suivantes consistant à :
- identifier un état d'environnement au moyen d'un nombre de capteurs d'environnement du véhicule, **caractérisé par** les étapes consistant à
- dériver un nombre de règles de circulation sur la base de l'état d'environnement par un dispositif de commande du véhicule,
- générer la carte de règles par le dispositif de commande du véhicule sur la base au moins des règles de circulation, et
- envoyer la carte de règles à une unité externe au moyen d'une communication de véhicule à X,
- comparer la carte de règles générée avec une carte de règles supplémentaire, dans lequel la carte de règles supplémentaire est reçue directement à partir d'un autre véhicule ou d'un serveur central, et
- déclencher une opération de coordination si la carte de règles et la carte de règles supplémentaire ne coïncident pas, dans lequel l'opération de coordination est effectuée par des échanges et rapprochements directs multiples de cartes de règles et/ou d'informations de contrôle de plausibilité entre les véhicules participants jusqu'à ce que tous les véhicules participants disposent d'une carte de règles identique ou jusqu'à ce qu'un nombre prédéfini d'itérations soit atteint.

2. Procédé selon la revendication 1,
- dans lequel le procédé est exécuté en réaction au fait qu'une approche d'une intersection ou d'une jonction est identifiée,
- dans lequel l'approche est identifiée de préférence au moyen de capteurs d'environnement, en particulier au moyen d'une caméra, au moyen d'une navigation par satellite, au moyen d'une carte routière électronique et/ou au moyen d'une communication de véhicule à X.

3. Procédé selon la revendication 2,
- dans lequel les règles de circulation dérivées sont associées à l'intersection ou à la jonction, en particulier la priorité et le cédez le passage.

4. Procédé selon l'une quelconque des revendications précédentes,
- dans lequel le procédé est exécuté en réaction à l'identification d'une situation nécessitant une régulation,
- notamment une situation qui s'oppose à une manoeuvre de dépassement de véhicules qui se suivent, ou une situation telle qu'un rabattement ou un dépassement,
- dans lequel la situation est de préférence identifiée au moyen de capteurs d'environnement, en particulier au moyen d'une caméra ou au moyen d'une communication de véhicule à X.

5. Procédé selon l'une quelconque des revendications précédentes,
- dans lequel le procédé est exécuté en réaction à un message reçu d'un autre véhicule qui contient une demande d'envoi d'une carte de règles.

6. Procédé selon la revendication 4 ou 5,
- dans lequel, une fois une situation identifiée qui s'oppose à une opération de dépassement de véhicules qui se suivent, une interdiction de dépasser temporaire est dérivée en tant que règle de circulation.

7. Procédé selon l'une quelconque des revendications précédentes,
- qui est exécuté en continu à plusieurs reprises, en particulier périodiquement à plusieurs reprises, pour un rapprochement continu.

8. Procédé selon l'une quelconque des revendications précédentes,
- dans lequel la carte de règle est envoyée directement à au moins un autre véhicule en tant qu'unité externe.

9. Procédé selon l'une quelconque des revendications précédentes,
- dans lequel conjointement avec la carte de règles, un ou plusieurs des éléments suivants sont envoyés :
- une immatriculation du véhicule,
- une identification du véhicule,
- une topologie d'intersection,
- des propriétés d'objet, en particulier le type, la position et/ou la trajectoire du véhicule envoyant la carte de règles,
- des informations concernant la fiabilité de la carte de règles et/ou une fiabilité des capteurs d'environnement, en particulier d'une caméra,
- des informations concernant des véhicules qui ne sont pas équipés d'une technique permettant de participer à la coordination de règles de circulation, en particulier ceux qui ne sont pas équipés d'une technique de communication de véhicule à X, et en particulier y compris leurs immatriculations,
- une mesure de fiabilité.

10. Procédé selon l'une quelconque des revendications 1 à 9,
- dans lequel le véhicule ainsi que d'autres véhicules qui s'approchent d'une intersection ou d'une jonction ou roulent sur la même route participent à l'opération de coordination ;
et/ou
- dans lequel uniquement des véhicules qui ont calculé une intersection des trajectoires respectives participent à l'opération de coordination.

11. Procédé selon l'une quelconque des revendications 1 à 10,
- dans lequel un rapprochement de cartes de règles et/ou d'informations de contrôle de plausibilité contient un contrôle de plausibilité respectif,
- dans lequel un contrôle de plausibilité présente de préférence une ou plusieurs des étapes suivantes consistant à :
- évaluer et/ou pondérer des informations existantes, en particulier en ce qui concerne des informations provenant d'autres véhicules,
- détecter la signifiance et/ou la fiabilité des informations,
- vérifier lesquels des autres véhicules présentent des informations identiques ou ont envoyé des informations identiques,
- compléter des informations si elles sont complémentaires.

12. Procédé selon l'une quelconque des revendications 1 à 11,
- dans lequel lors de l'exécution de l'opération de coordination, une ou plusieurs des étapes suivantes sont exécutées par itération, consistant à :
- évaluer une signifiance et/ou confiance des informations avec des valeurs seuils ou des probabilités, par exemple une situation dangereuses ou un mode de conduite, tel que la conduite autonome ou la conduite automatique, d'un véhicule respectif,
- contrôler la plausibilité, par exemple de manière technique ou statistique,
- rassembler des informations, en particulier toutes les informations disponibles,
- fusionner, en particulier créer une nouvelle image, par exemple augmentée, en particulier augmentée de manière spatiale, et/ou précisée, qui est cohérente en particulier au niveau du contenu.

13. Procédé selon l'une quelconque des revendications 1 à 12,
- dans lequel le résultat de l'opération de coordination est une carte de règles qui est envoyée à un nombre d'autres véhicules.

14. Procédé selon l'une quelconque des revendications 1 à 13,
- qui présente lors de l'exécution de l'opération de coordination en outre une étape d'identification d'un blocage.

15. Procédé selon l'une quelconque des revendications 1 à 14,
- dans lequel lors de l'exécution de l'opération de coordination, une attribution aléatoire de priorités aux véhicules participants est effectuée,
- dans lequel un véhicule d'une priorité supérieure est prioritaire par rapport à des véhicules de priorité inférieure.

16. Procédé selon l'une quelconque des revendications 1 à 15,
- qui, dans le cas où un critère d'abandon est satisfait pendant l'opération de coordination, présente une étape d'abandon de l'opération de coordination.

17. Procédé selon l'une quelconque des revendications précédentes,
- dans lequel la carte de règles est envoyée par une liaison radio, en particulier dans un message de véhicule à X.

18. Procédé selon l'une quelconque des revendications précédentes,
- qui présente en outre une étape d'envoi d'informations, en particulier concernant des cartes de règles et/ou des règles de circulation, à des usagers de la route suivants ou autres,
- dans lequel cette étape d'envoi est répétée en continu ou en réaction à une situation régulée passée.

19. Procédé selon l'une quelconque des revendications précédentes,
- dans lequel la carte de règles et/ou la carte de règles supplémentaire sont associées
- à une intersection,
- à un rond-point,
- à une jonction, en particulier avec une autoroute,
- à un rétrécissement,
- à un arrêt
et/ou
- à une route, en particulier une route avec possibilité de dépassement.

20. Procédé selon l'une quelconque des revendications précédentes,
- dans lequel à l'étape d'envoi, la carte de règles est envoyée à un serveur central en tant qu'unité externe, de préférence conjointement avec des informations de fiabilité.
